# FASCICULE DE BREVET EUROPEEN

(11) **EP 3 657 044 B1**
(45) Date de publication et mention de la délivrance du brevet: **14.02.2024**
(21) Numéro de dépôt: 19209234.4
(22) Date de dépôt: 14.11.2019
(51) Int. Cl.: F16H 57/04

(54) **NOYAU DE LUBRIFICATION ET DE REFROIDISSEMENT POUR UN REDUCTEUR MECANIQUE DE TURBOMACHINE D'AERONEF**
SCHMIERUNGS- UND KÜHLUNGS-KERN FÜR EIN UNTERSETZUNGSGETRIEBE EINER TURBOMACHINES EINERS FLUGZEUGS
LUBRICATION AND COOLING CORE FOR A MECANICAL REDUCER OF A AIRCRAFT'S TURBOMACHINE

(30) Priorité: 23.11.2018 FR 1871749
(43) Date de publication de la demande: 27.05.2020
(73) Titulaire: Safran Transmission Systems, 92700 Colombes (FR)
(72) Inventeur: SIMON, Adrien, Louis, 77550 MOISSY-CRAMAYEL (FR); DI GIOVANNI, Jean-Charles, Michel, Pierre, 77550 MOISSY-CRAMAYEL (FR); MORELLI, Boris, Pierre, Marcel, 77550 MOISSY-CRAMAYEL (FR)
(74) Mandataire: Gevers & Orès

(56) Documents cités:
- EP-A1- 3 290 751
- EP-A1- 3 333 459
- EP-A1- 3 489 550
- EP-A1- 3 599 396
- EP-A2- 2 333 250
- FR-A- 1 357 038

## Description

### Domaine technique de l'invention

La présente invention concerne un axe de satellite pour un réducteur mécanique de turbomachine en particulier d'aéronef, comportant un noyau de lubrification et de refroidissement dans ledit axe.

### Arrière-plan technique

L'état de l'art comprend notamment les documents WO-A1-2010/092263, FR-A1-2 987 416, EP-A1-3 333 459, EP-A1-3 290 751, EP-A2-2 333 250, FR-A-1 357 038 et FR-A1-3 041 054. ,et EP-A1 -3 489 550.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Il existe plusieurs types d'engrènement par contact comme avec des dentures droites ou en chevron.

La présente invention propose un perfectionnement d'un réducteur avec une solution simple, efficace et économique pour améliorer la circulation et/ou l'évacuation de l'huile dans une turbomachine.

### Résumé de l'invention

Dans le contexte de l'invention, un réducteur mécanique de turbomachine comporte plusieurs aspects.

Selon un premier aspect qui ne fait pas l'objet de l'invention, le réducteur comporte un déflecteur, ce déflecteur étant destiné à être intercalé entre deux satellites adjacents dudit réducteur, ce déflecteur comportant un bloc comprenant une première surface latérale qui est cylindrique et concave et qui a un rayon de courbure R1 mesuré depuis un axe G1, le bloc comportant une seconde surface latérale, opposée à ladite première surface, qui est cylindrique et concave et qui a un rayon de courbure R1 mesuré depuis un axe G2 qui est parallèle à G1, caractérisé en ce qu'il comprend sur chacune desdites première et seconde surfaces au moins une languette en saillie qui a une forme générale allongée autour de l'axe G1, G2 de la surface considérée et dont la périphérie interne est incurvée concave et a un rayon de courbure R2 mesuré depuis cet axe G1, G2 qui est inférieur à R1.

Le déflecteur comprend ainsi des languettes sur ces surfaces cylindriques entourant les satellites. Chacune de ces languettes est configurée pour être engagée dans une rainure inter-hélices de la denture d'un satellite, et pour s'étendre le long de cette rainure. Un satellite comprend en effet une denture à au moins deux hélices (respectivement avant et arrière), c'est-à-dire une denture comportant deux bandes annulaires dentelées adjacentes. Ces deux hélices sont séparées l'une de l'autre par une rainure annulaire. On comprend donc que les hélices d'un satellite sont séparées par la languette d'un déflecteur, dans la zone d'implantation de ce déflecteur. La languette a une fonction de « déflecteur inter-hélices » qui s'ajoute à la fonction principale du « déflecteur inter-satellites ». Ce premier aspect du réducteur permet d'empêcher la recirculation d'huile et de particules entre les hélices avant et arrière des satellites. Les gains apportés par ce déflecteur sont nombreux : pas de recirculation d'huile entre les hélices donc meilleure évacuation des calories générées en fonctionnement, limitation des transitions des particules, rigidification de la structure du déflecteur, etc. Ce premier aspect du réducteur est compatible de tout type de réducteur (planétaire, épicycloïdale, etc.). Il est également compatible de tout type de denture (droite, chevron) à condition que cette denture comporte au moins deux hélices. Il est en outre compatible de tout type de porte-satellites qu'il soit monobloc ou de type cage-porte cage. Enfin, il est compatible de tout type de palier de satellite, qu'il soit composé d'éléments roulants, d'un palier hydrodynamique, etc.

Le déflecteur peut comprendre une ou plusieurs des caractéristiques suivantes, prises isolément les unes des autres, ou en combinaison les unes avec les autres :
- le déflecteur comprend une seule languette en saillie sur chacune desdites surfaces, de préférence sensiblement au milieu de la surface ; fonctionnellement, elle est de préférence en vis-à-vis de la gorge ou rainure des satellites qui se trouve entre leurs deux hélices,
- le déflecteur comprend plusieurs languettes en saillie sur chacune desdites surfaces,
- chaque languette a une étendue circonférentielle qui est inférieure ou égale à l'étendue circonférentielle de la surface sur laquelle elle est située,
- chaque languette a une étendue circonférentielle qui est supérieure à l'étendue circonférentielle de la surface sur laquelle elle est située ; des portions d'extrémité des languettes peuvent ainsi s'étendre en saillie sur le déflecteur,
- le déflecteur comprend des trous taraudés de réception de vis de fixation du déflecteur à un porte-satellites dudit réducteur,
- le déflecteur comprend un circuit de lubrification intégré,
- ledit circuit comprend une entrée d'huile reliée par des perçages à au moins une sortie d'huile,
- ladite entrée d'huile comprend une tubulure de raccordement par emmanchement mâle-femelle,
- le déflecteur comprend une sortie d'huile destinée à recevoir une douille de raccordement fluidique étanche,
- le déflecteur comprend une sortie d'huile formée par un gicleur formé d'une seule pièce avec ledit bloc, ce gicleur ayant de préférence une forme générale allongée et s'étendant dans un plan médian de symétrie dudit bloc.
- Ceci permet de rendre plus rigide le gicleur en porte-à-faux de lubrification des cannelures du solaire, et de limiter le nombre de pièces et les interfaces en fusionnant les fonctions connues du déflecteur et du gicleur tout en conservant facilitant le montage du déflecteur. Les gains apportés sont notamment : un gicleur plus court (moins sujet aux vibrations), moins de pièces et donc moins de références, moins d'usinage et moins de montage, etc.

Dans ce contexte, le réducteur mécanique de turbomachine, qui est décrit sans toutefois faire l'objet de l'invention, comporte également un porte-satellites comportant une cage définissant un logement de réception d'un solaire central d'axe X de rotation, de satellites disposés autour du solaire et comportant chacun une denture à double hélice, ainsi que de déflecteurs tels que décrits ci-dessus qui sont chacun fixés à la cage et intercalés entre deux satellites adjacents de façon à ce que leurs languettes soient engagées dans des rainures inter-hélices des dentures des satellites.

Avantageusement, l'un des déflecteurs du porte-satellites comporte un gicleur qui est orienté en direction radiale par rapport audit axe X et vers l'intérieur de façon à être apte à projeter de l'huile sur des cannelures internes dudit solaire.

Avantageusement, la cage comporte une paroi radiale comportant un orifice central dont un bord périphérique radialement interne comprend une ou plusieurs échancrures pour faciliter le montage des déflecteurs et en particulier de celui comportant le gicleur.

Selon un second aspect de ce réducteur, aspect qui fait l'objet de l'invention, l'invention concerne un axe de satellite pour un réducteur mécanique de turbomachine, en particulier d'aéronef, cet axe ayant une forme générale tubulaire et comportant des orifices sensiblement radiaux s'étendant entre au moins une surface radialement interne de cet axe et la périphérie externe de cet axe, et un noyau de lubrification et de refroidissement, monté dans ledit axe, caractérisé en ce que le noyau comprend des premier et second flasques coaxiaux et tronconiques comportant chacun une première extrémité de plus grand diamètre et une seconde extrémité opposée de plus petit diamètre, les flasques étant fixés ensemble par leurs secondes extrémités et étant destinés à s'étendre à l'intérieur dudit axe et à recouvrir deux surfaces tronconiques internes de cet axe pour définir avec celle-ci deux cavités annulaires de circulation d'huile de lubrification et de refroidissement de cet axe, lesdites secondes extrémités desdits premier et second flasques comportant des moyens de raccordement fluidique desdites cavités annulaires à une source d'huile de lubrification et de refroidissement.

Le noyau a pour fonction de réceptionner de l'huile de lubrification puis de le répartir et de l'acheminer vers différents éléments du réducteur. Le noyau comprend deux circuits distincts, ce qui est avantageux car les circuits peuvent faire circuler de l'huile à des débits et/ou à des températures différentes et limite le transfert de pollutions. La conception monobloc de ce noyau permet de faciliter son montage dans le réducteur, d'optimiser sa masse, et de limiter les phénomènes vibratoires. Le diamètre de ce noyau est avantageusement choisi pour faciliter son intégration dans le réducteur. Le diamètre du réducteur et en particulier de ses chambres est par exemple inférieur au diamètre externe du porte-satellites (ou de la cage ou du porte-cage du porte-satellites) et supérieur au diamètre externe d'un arbre d'entrée du réducteur qui est engagé dans le solaire et accouplé au solaire. Cet arbre d'entrée peut comprendre un tronçon en soufflet conférant une certaine souplesse à l'arbre pour reprendre au mieux les désalignements de l'arbre moteur.

Les gains apportés par cette invention sont : une meilleure intégration du noyau dans le moteur, une libération significative d'espace pour augmenter la taille de la souplesse de l'arbre moteur (ce qui permet une meilleure reprise des désalignements du réducteur), une structure potentiellement plus rigide (et donc moins sujet aux phénomènes vibratoires), une même interface de raccordement possible pour les différentes sorties d'huile, un chemin d'huile plus court avec moins de perte de charge, etc.

Cette invention est principalement conçue pour un réducteur de type planétaire mais pourrait être compatible d'un réducteur épicycloïdal moyennant quelques aménagements. Elle est compatible de tout type de denture (droite, chevron), ainsi que de tout type de porte-satellites qu'il soit monobloc ou de type cage et porte-cage. Enfin, cette invention est compatible de tout type de palier de satellite, qu'il soit composé d'éléments roulants, d'un palier hydrodynamique, etc.

L'axe selon l'invention peut comprendre une ou plusieurs des caractéristiques suivantes, prises isolément les unes des autres, ou en combinaison les unes avec les autres, si les revendications adjointes le permettent :
- chacune desdites premières extrémités, voire également chacune desdites secondes extrémités, comporte une surface cylindrique externe de centrage comportant une gorge annulaire de réception d'un joint d'étanchéité,
- l'un desdits flasques comprend une chambre interne centrée sur un axe Y commun aux flasques, cette chambre étant reliée d'une part par des passages radiaux formés dans ce flasque ou entre les deux flasques aux dites cavités annulaires, et d'autre part à une tubulure de raccordement centré sur l'axe Y,
- ladite tubulure est configurée pour coopérer par emmanchement mâle-femelle, en particulier avec une douille de raccordement fluidique qui peut être utilisée pour raccorder la tubulure à un distributeur d'huile de lubrification,
- ladite chambre a une forme générale cylindrique centrée sur l'axe Y et comprend une extrémité longitudinale reliée à la tubulure et une extrémité longitudinale opposée qui est soit fermée, soit ouverte et qui débouche dans une autre chambre, cette autre chambre étant formée dans l'autre flasque et étant reliée par d'autres passages radiaux aux dites cavités annulaires,
- lesdits flasques sont configurés pour être fixés l'un à l'autre, et de préférence seulement l'un à l'autre,
- lesdits flasques sont configurés pour être fixés l'un à l'autre ainsi qu'à une bride annulaire de fixation dudit axe de satellite,
- les flasques sont en appui de part et d'autre de ladite bride ; comme il n'y a plus de jeu, le noyau ne peut pas translater suivant l'axe Y ; le montage est donc moins hyperstatique,
- les flasques sont fixés par une ou plusieurs vis réparties autour de l'axe Y comme les moyens de fixation ne coïncident avec l'axe du palier et qu'il passe par un trou de passage de ce dernier, cela empêche le noyau de tourner sur lui-même ; le noyau a donc son dernier degré de liberté bloqué,
- le noyau comporte une chambre interne qui est dimensionnée pour assurer une répartition de l'huile par son ralentissement, permettant de réduire les effets de cinétique des fluides.
- la périphérie externe de l'axe est configurée pour définir au moins une, et de préférence deux, piste(s) de roulement de palier(s),
- la périphérie interne de l'axe est du type biconique et comprend notamment les deux surfaces tronconiques internes qui sont coaxiales et s'évasent dans des directions opposées, ces deux surfaces tronconiques étant recouvertes par lesdits flasques et définissant avec ces flasques les deux cavités annulaires de circulation d'huile.

Selon un troisième aspect du réducteur, qui ne fait pas partie de l'invention, le réducteur comprend un distributeur d'huile de lubrification f, qui a une forme générale annulaire autour d'un axe X et est formé d'une seule pièce, ce distributeur comportant des premier et second circuits d'huile indépendants, ledit premier circuit d'huile comportant une première entrée d'huile reliée par une première chambre annulaire à plusieurs sorties d'huile réparties sur une première circonférence C1 autour dudit axe X, et ledit second circuit d'huile comportant une seconde entrée d'huile reliée par une seconde chambre annulaire à plusieurs sorties d'huile réparties sur une seconde circonférence C2 autour dudit axe X, les première et seconde circonférences ayant des diamètres différents.

L'axe d'un satellite de réducteur est guidé par au moins un palier. La chaleur générée par le passage des éléments mobiles du roulement du palier doit être évacuée. Le palier est alimenté en huile à travers des orifices traversants radialement l'axe du satellite. La circulation de cette huile à l'intérieur de l'axe de satellite et en particulier sur la périphérie interne de l'axe, permet d'absorber les calories générées par le palier en fonctionnement. Ces calories sont transmises par conduction depuis la bague interne du palier, qui peut être intégrée à la périphérie externe de l'axe du satellite, jusqu'à la périphérie interne de cet axe. L'invention s'applique à une forme de périphérie interne biconique de l'axe de satellite. L'utilisation de deux flasques indépendants permet d'épouser la forme biconique de la périphérie interne d'un axe, afin de former une ou plusieurs cavités de circulation d'huile pour la lubrification et le refroidissement de l'axe.

La solution proposée est compatible de tout type de réducteur (planétaire, épicycloïdale, etc.). Cette solution est compatible de tout type de denture (droite, chevron), et de tout type de porte-satellites qu'il soit monobloc ou de type cage-porte cage. Enfin, la solution n'est compatible que de paliers satellites composés d'éléments roulants (roulements à billes, à rouleaux, à rouleaux coniques, etc.).

Le distributeur du réducteur peut comprendre une ou plusieurs des caractéristiques suivantes, prises isolément les unes des autres, ou en combinaison les unes avec les autres, et qui ne font pas partie de l'invention:
- lesdites première et seconde entrées sont orientées en direction radiale par rapport audit axe X,
- lesdites première et seconde entrées sont situées dans un même plan perpendiculaire audit axe X et sont inclinées l'une par rapport à l'autre d'un angle déterminé,
- lesdites première et seconde chambres ont en section axiale une forme générale circulaire,
- lesdites première et seconde chambres sont formées par deux anneaux tubulaires coaxiaux et intimement liés,
- le diamètre de ladite première circonférence C1 est inférieur à ceux desdits anneaux, et le diamètre de ladite seconde circonférence C2 est supérieur à ceux desdits anneaux,
- lesdites premières et/ou secondes sorties sont orientées axialement dans la même direction,
- le distributeur comprend des pattes de fixation comportant des orifices de passages de vis,
- lesdites première et seconde chambres ont chacune un diamètre supérieur au diamètre externe d'une portion d'un arbre destinée à traverser axialement le distributeur ; cet arbre est un arbre d'entrée du réducteur,
- le diamètre et l'orientation desdites première et seconde chambres sont arrangés de telle sorte à ce que des conduits de sortie d'huile soient de longueur similaire ; cet arrangement permet aussi d'avoir des conduits d'entrée d'huile de la longueur la plus courte, de la forme la plus linéaire tout en ayant un rayon de courbure confortable ; cela permet aussi que les conduits de section circulaire débouche entièrement et de façon tangente à leur chambre respective ; il est ainsi possible de remplir toutes ces conditions tout en ayant les axes des entrées d'huile sur un même plan médian ; il est avantageux d'une part d'avoir des entrées d'huile courte afin de pouvoir monter le distributeur qui est diamétralement plus petit que le diamètre du porte-cage ; d'autre part, il est avantageux d'avoir des conduits linaires et qui débouchent entièrement et de façon tangente dans les chambres pour réduire les pertes de charge au minimum ;
- toutes les sorties d'huile, qu'elles soient reliées à ladite première chambre ou à ladite seconde chambre, sont identiques ; cela permet d'avoir les mêmes outils d'usinage, les mêmes contrôles et les mêmes joints toriques sur les déflecteurs que ceux du noyau,
- au moins certaines sorties d'huile sont avancées de telle sorte à rentrer à l'intérieur de l'axe et à l'intérieur du flasque arrière du noyau ; ceci permet de diminuer la longueur du conduit d'huile et d'augmenter la rigidité du montage.

Selon un autre aspect du réducteur, qui ne fait pas partie de l'invention, le réducteur comprend un porte-satellites comportant une cage définissant un logement de réception d'un solaire central d'axe X de rotation et de satellites disposés autour du solaire, un distributeur tel que décrit ci-dessus étant rapporté et fixé sur la cage.

Avantageusement, la cage comporte à sa périphérie des logements axiaux destinés à recevoir des doigts axiaux solidaires d'un porte-cage dudit réducteur, chaque logement étant traversé par une broche sensiblement radiale qui est destinée à guider en rotation un moyen de liaison, tel qu'une rotule ou un palier, porté par un desdits doigts, lesdites première et seconde entrées dudit distributeur étant orientées respectivement selon des première et seconde directions qui traversent chacune un secteur d'espace libre délimité axialement par la cage et le porte-cage et s'étendant circonférentiellement entre deux doigts adjacents.

L'axe de satellite selon l'invention se place dans le contexte d'un un réducteur mécanique de turbomachine, en particulier d'aéronef, comportant au moins un des éléments (déflecteur, distributeur, etc.), décrits dans ce qui précède, ainsi qu'une turbomachine comportant un tel réducteur.

Les caractéristiques des différents aspects peuvent être combinées les unes avec les autres.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une section axiale en vue partielle d'un réducteur mécanique,
[Fig.3] la figure 3 est une vue en coupe axiale d'un réducteur mécanique intégrant l'invention,
[Fig.4] la figure 4 est une vue en perspective du réducteur de la figure 3,
[Fig.5] la figure 5 est une vue en perspective d'un distributeur d'huile de lubrification du réducteur de la figure 3,
[Fig.6] la figure 6 est une vue en coupe d'un détail du réducteur de la figure 3 et montre une entrée d'huile du distributeur de la figure 5,
[Fig.7] la figure 7 est une vue en coupe d'un détail du réducteur de la figure 3 et montre une entrée d'huile du distributeur de la figure 5,
[Fig.8] la figure 8 est une vue en coupe d'un détail de la figure 3 et montre un axe de satellite selon l'invention dans lequel est monté un noyau de lubrification et de refroidissement,
[Fig.9] la figure 9 est une vue en perspective éclatée de l'axe et du noyau de la figure 8,
[Fig.10] la figure 10 est une vue en coupe selon la ligne X-X de la figure 8,
[Fig.11] la figure 11 est une vue similaire à celle la figure 8 et montre le cheminement d'huile de lubrification et de refroidissement,
[Fig.12] la figure 12 est une vue similaire à celle de la figure 8 et illustrant une autre type d'axe de satellite ne faisant pas l'objet de l'invention,
[Fig.13] la figure 13 est une vue similaire à celle la figure 12 et montre le cheminement d'huile de lubrification et de refroidissement,
[Fig.14a] la figure 14a est une vue en perspective d'un déflecteur,
[Fig.14b] la figure 14b est une vue similaire à celle de la figure 14a et illustrant une variante de réalisation d'un déflecteur,
[Fig.15] la figure 15 est une vue partielle en coupe radiale du réducteur de la figure 3 et montre la position du déflecteur de la figure 14 dans ce réducteur,
[Fig.16] la figure 16 est une vue en coupe selon la ligne XVI-XVI de la figure 15,
[Fig.17] la figure 17 est une vue partielle en perspective d'une face avant du réducteur de la figure 3,
[Fig.18] la figure 18 est une vue de la face avant du réducteur de la figure 3,
[Fig.19] la figure 19 est une vue schématique en perspective du réducteur de la figure 3, et montre une étape d'assemblage de ce réducteur,
[Fig.20] la figure 20 est une vue schématique en perspective du réducteur de la figure 3, et montre une étape d'assemblage de ce réducteur,
[Fig.21] la figure 21 est une vue schématique en perspective du réducteur de la figure 3, et montre une étape d'assemblage de ce réducteur,
[Fig. 22] la figure 22 est une vue schématique en perspective du réducteur de la figure 3, et montre une étape d'assemblage de ce réducteur.

### Description détaillée de l'invention

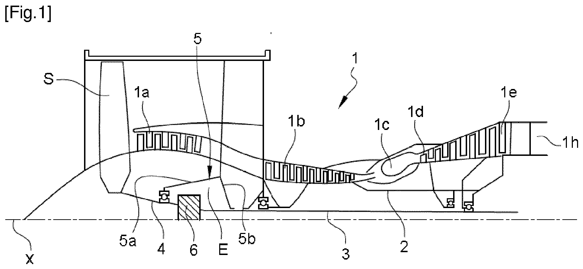

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entraîné à l'arbre BP 3 au moyen d'un réducteur 6. Ce réducteur 6 est généralement de type planétaire ou épicycloïdal.

Bien que la description qui suit concerne un axe de satellite d'un réducteur du type planétaire ou épicycloïdal, elle s'applique également à un axe de satellite d'un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

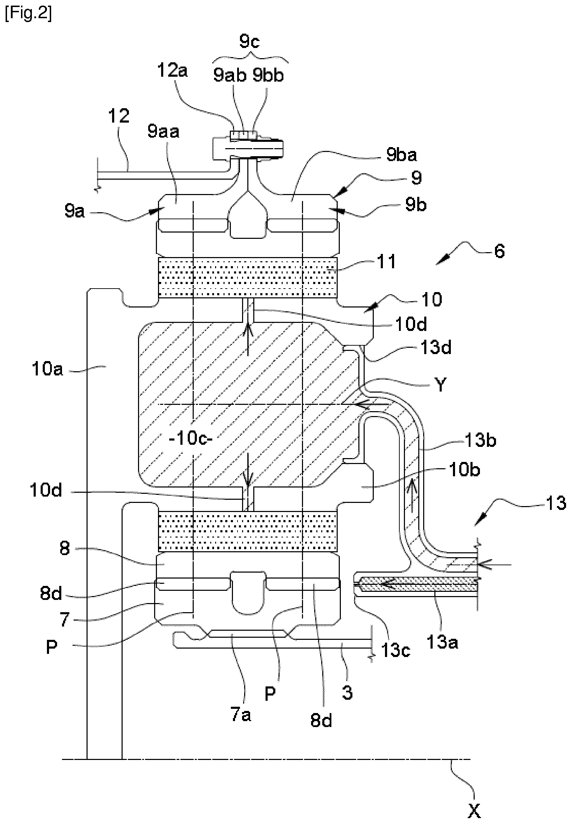

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
▪ Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
▪ Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices avant et sur un autre plan médian P pour les hélices arrière. Dans les autres figures, dans le cas d'un roulement à deux rangées de rouleaux, chaque rangée d'éléments roulants est aussi centrée sur deux plans médians.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

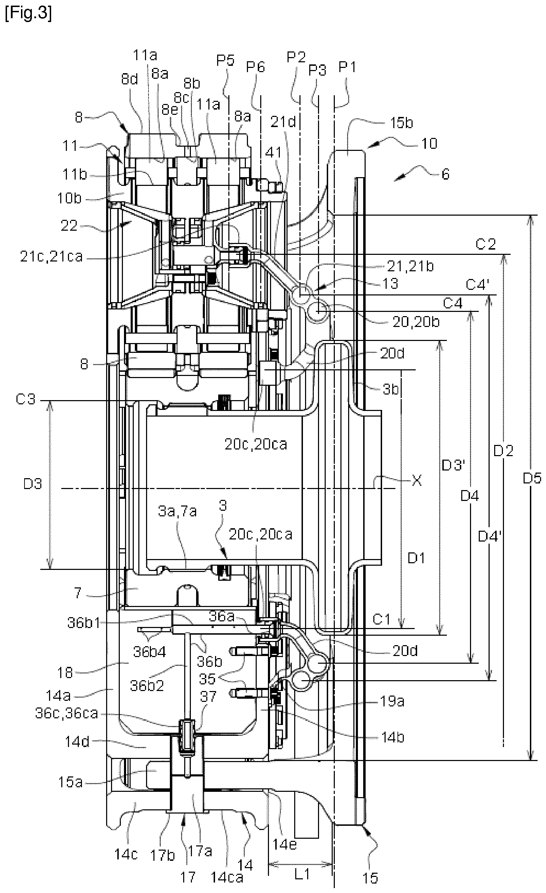

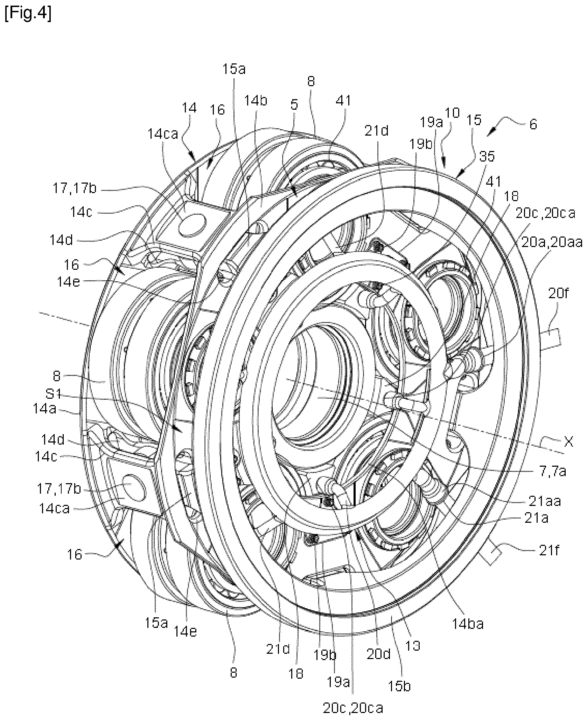

Les figures 3 et 4 représentent un mode de réalisation d'un réducteur 6 comportant l'invention.

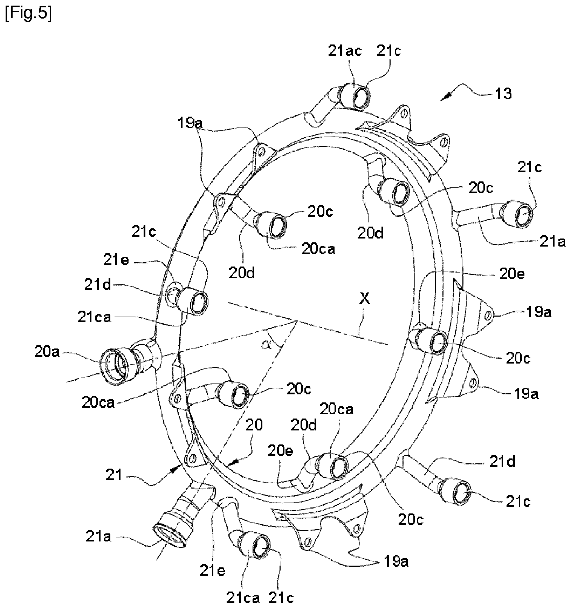

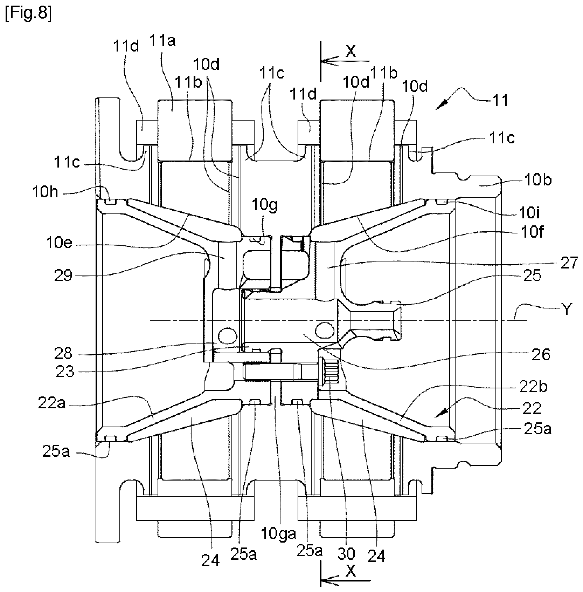

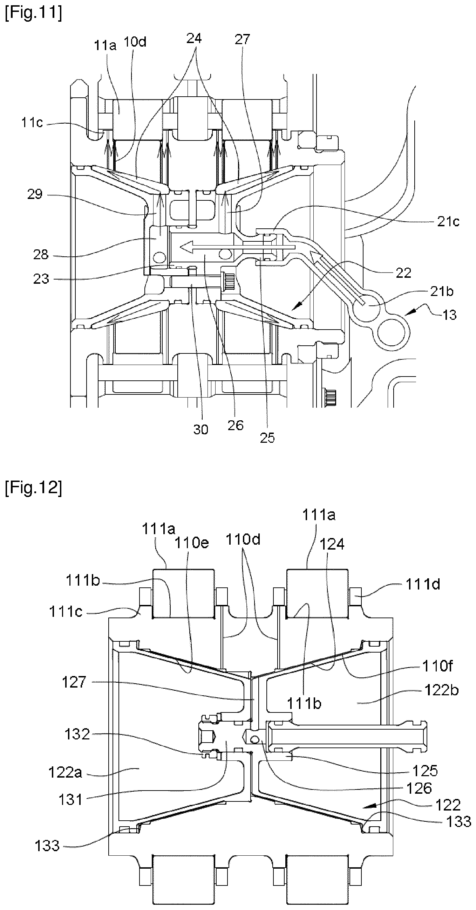

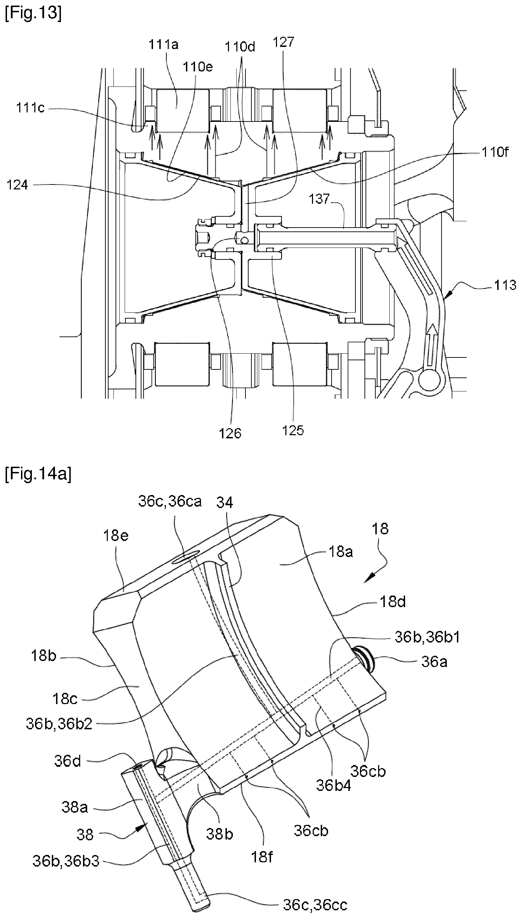

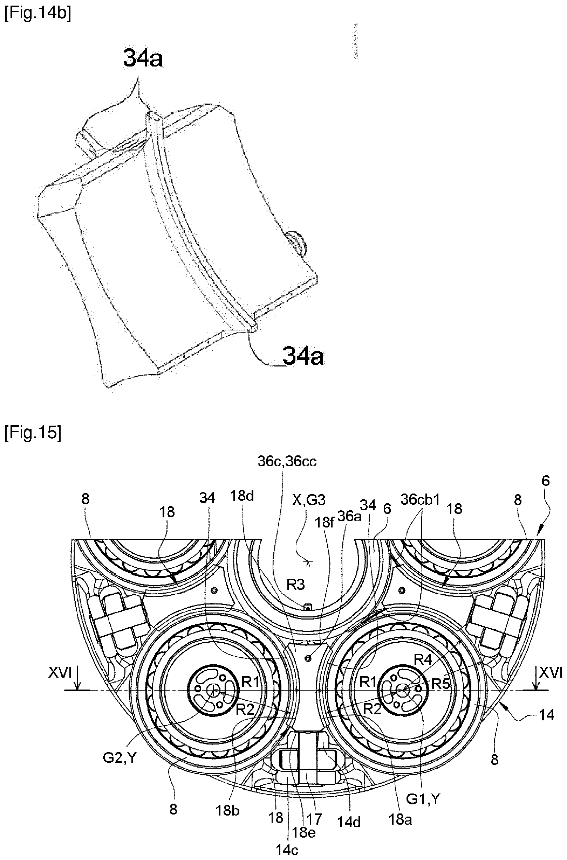

Un distributeur d'huile de lubrification de ce réducteur sera décrit dans ce qui suit en référence aux figures 5 à 7. L'invention concerne en particulier un axe de satellite de ce réducteur, qui comporte un noyau de lubrification et de refroidissement et qui sera décrit dans ce qui suit en référence aux figure 8 à 11. Les figures 12 et 13 décrivent un axe de satellite ne faisant pas l'objet de l'invention et pouvant équiper le même réducteur. Enfin un déflecteur du réducteur sera décrit dans ce qui suit en référence aux figures 14 à 22. Il sera compris que la description du distributeur et du réflecteur ne sont ici que des exemples purement illustratifs destinés à un réducteur comprenant des axes de satellites selon l'invention.

Le réducteur 6 des figures 3 et 4 comprend un porte-satellites 10 du type à cage 14 et porte-cage 15, la cage 14 et le porte-cage 15 étant reliés par des liaisons à rotules.

La cage 14 comprend deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par des couples de pontets 14c, 14d, régulièrement répartis autour de l'axe X. Ces couples de pontets assurent une liaison structurelle entre les parois 14a, 14b. Chaque couple de pontets comprend deux pontets, respectivement radialement externe 14c et radialement interne 14d, qui s'étendent sensiblement parallèlement le long de l'axe X à distance radiale l'un de l'autre.

Les couples de pontets 14c, 14d définissent entre eux des lumières 16 qui s'étendent circonférentiellement autour de l'axe X et sont délimitées axialement par les bords périphériques externes des parois 14a, 14b. Les couples de pontets sont au nombre de 5 dans l'exemple représenté. Chaque couple de pontets forme une chape pour accueillir un doigt 15a du porte-cage 15. Autrement dit, les pontets de chaque couple définissent entre eux un logement de réception d'un doigt 15a du porte-cage 15. Des ouvertures 14e de forme oblongue sont réalisées dans la paroi arrière 14b de telle sorte à laisser passer les doigts 15a entre les pontets 14c, 14d. La paroi 14a peut comporter des ouvertures similaires alignées axialement avec les ouvertures 14e de la paroi 14b.

Le nombre de doigts 15a est égal au nombre de couples de pontets 14c, 14d et est de 5 dans l'exemple représenté. Ces doigts 15a s'étendent en saillie axialement vers l'amont depuis un anneau 15b du porte-cage 15 s'étendant autour de l'axe X. Les doigts 15a du porte-cage 15 sont engagés dans les logements inter-pontets par translation axiale depuis l'arrière, à travers les ouvertures 14e de la paroi 14b.

Chaque doigt 15a comprend, sensiblement en son milieu, un évidement de montage d'un palier (non représenté) destiné à être traversé par une broche cylindrique 17 portée par chaque couple de pontets 14c, 14d. Chaque broche 17 traverse le logement inter-pontets et a une orientation sensiblement radiale par rapport à l'axe X. Chaque broche 17 comporte un corps cylindrique 17a relié à une extrémité, ici radialement externe, à une collerette 17b. La broche 17 est ici engagée par translation radiale depuis l'extérieur à travers des orifices radiaux des pontets 14c, 14d, sa collerette 17b étant destinée à venir en appui radial sur une face plane 14ca du pontet externe 14c. Après insertion de la broche 17 dans les orifices des pontets, jusqu'à mise en appui de la collerette 17b sur le pontet externe, la collerette 17b est fixée à ce pontet par exemple par vissage.

Comme on le voit dans les dessins, en position assemblée, l'anneau 15b du porte-cage 15 est écarté axialement d'une distance L1 prédéterminée de la paroi arrière 14b en regard de la cage 14 (figure 3). L'espace annulaire s'étendant entre la périphérie externe de la cage 14 et la périphérie externe du porte-cage 15 est sectorisé par les doigts 15a qui définissent ainsi entre eux des secteurs d'espace S1 (figure 4).

La cage 14 définit un logement interne de réception du solaire 7 d'axe X, des satellites 8 disposés autour du solaire 7 et engrenés avec lui, ainsi que de déflecteurs 18 qui seront décrits dans le détail dans ce qui suit en référence aux figures 14 et suivantes.

Comme décrit dans ce qui précède en relation avec la figure 2, le solaire 7 comprend des cannelures internes 7a d'accouplement à des cannelures externes 3a complémentaires de l'arbre BP 3 (figure 3). On peut constater que les cannelures 3a sont situées à l'extrémité avant de l'arbre BP 3 qui comprend un tronçon aval 3b en forme de soufflet. Ce tronçon 3b est ici situé dans un plan P1 perpendiculaire à l'axe X qui est écarté axialement de la cage 14 du porte-satellites 10 et qui passe sensiblement par l'anneau 15b du porte-cage 15 dans notre exemple. Ce tronçon 3b confère à l'arbre BP 3 une certaine souplesse limitant la transmission des efforts du moteur en fonctionnement vers le réducteur. Les cannelures 3a sont ici situées sur une circonférence C3 d'axe X et de diamètre D3, et le tronçon 3b a un diamètre externe D3' qui est supérieur à D3 et inférieur au diamètre interne D5 de l'anneau 15b.

Le réducteur 6 comprend aussi un distributeur 13 d'huile de lubrification, qui ne fait pas l'objet de l'invention, et qui est mieux visible à la figure 5.

Le distributeur 13 a une forme générale annulaire autour de l'axe X et est formé d'une seule pièce. Il est ici rapporté et fixé sur le porte-satellites 10 et comprend pour cela des pattes 19a de fixation sur la cage 14 du porte-satellites et en particulier sur sa paroi arrière 14b, comme représenté à la figure 4. Les pattes 19a sont régulièrement réparties autour de l'axe X et comprennent des portions appliquées sur la face radiale aval de la paroi 14b et comportant des orifices de passage de vis 19b vissées dans des trous taraudés de la paroi 14b.

Le distributeur 13 comprend des premier et second circuits d'huile 20, 21 indépendants, le premier circuit d'huile 20 comportant une première entrée d'huile 20a reliée par une première chambre annulaire 20b à plusieurs sorties d'huile 20c réparties sur une première circonférence C1 autour de l'axe X, et le second circuit d'huile 21 comporte une seconde entrée d'huile 21a reliée par une seconde chambre annulaire 21b à plusieurs sorties d'huile 21c réparties sur une seconde circonférence C2 autour de l'axe X (figures 3 et 5).

La circonférence C1 a un diamètre D1 et la circonférence C2 a un diamètre D2, D2 étant supérieur à D1. Les sorties d'huile 20c se trouvent sur D1 ou C1 et les sorties 21c se trouvent sur D2 ou C2. Dans l'exemple représenté, D1 et D2 sont chacun supérieurs à D3 et inférieurs à D5.

Le distributeur 13 est diamétralement plus petit que D5 ce qui autorise son montage/démontage sans avoir besoin de toucher au reste. A cause des broches 17 et des déflecteurs 18, la cage et le porte-cage sont montés en premier, puis le solaire 7, les satellites 8, les axes 10b et enfin le distributeur 13, comme cela sera décrit plus en détail dans ce qui suit.

Le diamètre externe du distributeur 13 correspond à l'extrémité des entrées 20a, 21a (qui se terminent à la même circonférence).

Les chambres 20b, 21b sont formées par deux anneaux tubulaires coaxiaux et intimement liés, c'est-à-dire que leurs parois tubulaires sont fusionnées. Les chambres ont en section axiale une forme générale circulaire et les sections de passage des chambres sont sensiblement constantes sur toute leur étendue angulaire et sensiblement identiques l'une à l'autre.

La première chambre 20b s'étend sensiblement sur une circonférence C4 de diamètre D4 compris entre D1 et D2. La seconde chambre 21b s'étend sensiblement sur une autre circonférence C4' de diamètre D4' compris entre D1 et D2. D4' est supérieur à D4. Les circonférences C4 et C4' sont centrées sur l'axe X. D1 est inférieur à D4 et D4' alors que D2 est supérieur à D4 et D4'. Il est avantageux que C4 et C4' soient situées sensiblement à midistance (radiale) de C1 et C2, car cela rigidifie le distributeur 13.

La chambre 21b de plus grand diamètre est située en avant de celle 20b de plus petit diamètre. Comme on le voit à la figure 4, les chambres s'étendant dans des plans P2, P3 perpendiculaires à l'axe X, qui passent entre la cage 14, d'une part, et l'anneau 15b du porte-cage 15, d'autre part. On constate également sur cette figure que le plan P3 qui passe par la seconde chambre 20b ou chambre arrière est proche du tronçon 3b de l'arbre BP 3 et son diamètre D4' est supérieur à celui D3' du tronçon 3b pour éviter tout risque de contact en fonctionnement.

Les entrées 20a, 21a sont orientées en direction radiale par rapport à l'axe X. Elles sont de préférence situées dans un même plan P4 perpendiculaire à l'axe X et sont inclinées l'une par rapport à l'autre dans ce plan P4 d'un angle α déterminé (figures 5 à 7). Cet angle α est par exemple compris entre 30 et 60°. Comme on le voit à la figure 4, les entrées 20a, 21a sont orientées respectivement selon des directions qui traversent chacune un des secteurs d'espace S précités. Un doigt 15a du porte-cage passe entre les deux entrées 20a, 21a.

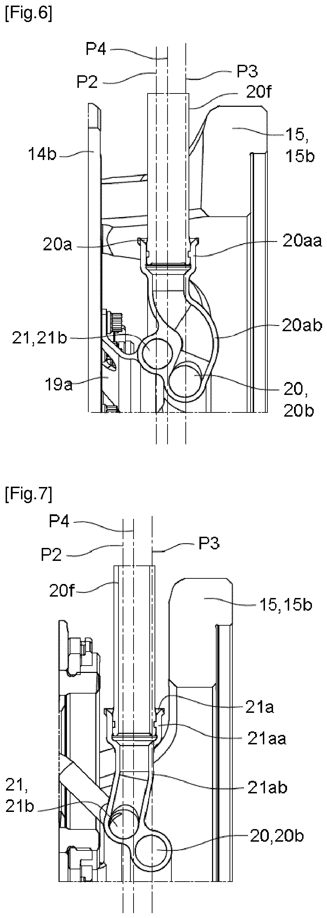

Les plans P2, P3 et P4 sont situés entre la cage 14 et l'anneau 15b du porte-cage 15 (figures 6 et 7).

Le distributeur 13 est avantageusement configuré pour être raccordé fluidiquement, au niveau de ses entrées et de ces sorties, par des emmanchements du type mâle-femelle, c'est-à-dire par des raccords nécessitant seulement un emboîtement par translation axiale d'un raccord mâle dans un raccord femelle. Même si un raccord est présenté dans ce qui suit comme mâle et destiné à coopérer avec un raccord femelle, il peut en variante être remplacé par un raccord femelle destiné donc à coopérer avec un raccord mâle, et inversement.

En ce qui concerne les entrées 20a, 21a, elles comprennent chacune un raccord femelle 20aa, 21aa dans l'exemple représenté qui est destiné à recevoir le raccord mâle d'un tuyau 20f, 21f d'alimentation (figures 4, 6 et 7). Les tuyaux 20f, 21f sont rectilignes et traversent les secteurs d'espace S précités et sont destinés à traverser également des bras tubulaires d'un carter intermédiaire de la turbomachine 1, en vue du raccordement du distributeur 13 à une source d'huile de lubrification. Le nombre de bras du carter intermédiaire peut être supérieur à 5 et donc au nombre de secteurs d'espace S. L'étanchéité des raccords mâle-femelle peut être assurée par des joints toriques ou analogues.

Les raccords femelles 20aa, 21aa des entrées 20a, 21a sont reliés aux chambres respectives par des conduites 20d, 21d. Le raccord 20aa de l'entrée 20a est relié à la chambre 20b la plus éloignée du plan P4 par une conduite 20ab qui a une forme générale de S (figure 6). Le raccord 21aa de l'entrée 21a est relié à la chambre 21b la plus proche du plan P4 par une conduite 21ab qui a une forme rectiligne ou légèrement coudé (figure 7). En ce qui concerne les sorties 20c, elles comprennent chacune un raccord femelle 20ca dans l'exemple représenté qui est destiné à recevoir le raccord mâle d'un des déflecteurs 18. Ces sorties 20c sont orientées axialement, toutes dans la même direction ici vers l'avant. Les raccords 20ca de ces sorties sont reliées à la chambre 20b par des canaux 20d sensiblement en L ou V (figure 5).

En ce qui concerne les sorties 21c, elles comprennent chacune un raccord femelle 21ca dans l'exemple représenté qui est destiné à recevoir le raccord mâle d'un des noyaux de lubrification et de refroidissement 22 qui sera décrit dans le détail dans ce qui suit en référence aux figures 8 à 13. Ces sorties 21c sont orientées axialement, toutes dans la même direction ici vers l'avant. Les raccords 21ca de ces sorties sont reliées à la chambre 21b par des conduits 21d sensiblement en L ou V.

Comme on le voit à la figure 3, les longueurs ou dimensions axiales des canaux 20d et des conduits 21d sont différentes, les sorties 21c étant situées dans un plan P5 perpendiculaire à l'axe X qui est plus en avant que celui P6 qui passe par les sorties 20c. Les plans P5 et P6 sont situés dans la cage 14.

Enfin, comme on le voit à la figure 5, les canaux 20d sont reliés à l'anneau formant la chambre 20b par des piquages 20e situés sur la périphérie interne de cet anneau, alors que les conduits 21d sont reliés à l'anneau formant la chambre 21b par des piquages 21e situés sur la périphérie externe de cet anneau (figure 5).

Comme évoqué dans ce qui précède, les sorties 21c du distributeur 13 sont raccordées à des noyaux 22 qui vont maintenant être décrits en références aux figures 8 à 11.

Les noyaux 22 ont pour fonction de lubrifier et de refroidir les axes 10b des satellites 8 qui sont ici centrés et guidés par les paliers 11 à rouleaux 11a.

Dans les exemples de réalisation représentés, chaque axe 10b est guidé par un palier 11 à double roulement, c'est-à-dire à double rangée de rouleaux 11a. Les deux rangées s'étendent autour d'un même axe qui est confondu avec celui, noté Y, de l'axe 10b du satellite 8.

Classiquement, les rouleaux sont guidés dans des pistes définies par des bagues interne et externe. Dans les exemples représentés, une particularité est liée au fait que les bagues internes de guidage des rouleaux 11a sont intégrées à l'axe 10b. La périphérie externe de l'axe 10b comprend ainsi des pistes cylindriques 11b de roulement des rouleaux 11a, chaque piste 11b étant délimitée axialement par des nervures annulaires 11c qui servent elles au guidage de cages 11d de maintien des rouleaux 11a. Par ailleurs, la figure 3 permet de voir que les bagues externes sont intégrées à la périphérie interne des satellites 8. La périphérie interne des satellites 8 comprend ainsi des pistes cylindriques 8a de roulement des rouleaux 11a, les pistes 8a étant séparées l'une de l'autre par une rainure annulaire 8b débouchant radialement vers l'intérieur et au fond de laquelle sont formées des perçages radiaux 8c de passage d'huile.

La périphérie externe de chaque satellite 8 comprend une denture 8d à double hélice, c'est-à-dire deux hélices coaxiales et adjacentes qui sont ici séparées l'une de l'autre par une rainure annulaire 8e débouchant radialement vers l'extérieur et au fond de laquelle débouchent les perçages 8c.

La périphérie interne de l'axe 10b de chaque satellite 8 a une forme générale biconique et comprend deux surfaces tronconiques internes 10e, 10f évasées dans des directions axiales opposées. La surface tronconique interne avant 10e est ainsi évasée vers l'avant et la surface tronconique interne arrière 10f est évasée vers l'arrière. Dans l'exemple représenté, une surface cylindrique 10g est située entre les surfaces tronconiques 10e, 10f, une surface cylindrique interne avant 10h s'étend entre l'extrémité avant de l'axe 10b et l'extrémité avant de la surface 10e, et une surface cylindrique interne arrière 10i s'étend entre l'extrémité arrière de l'axe 10b et l'extrémité arrière de cet axe 10b.

Des orifices 10d de passage d'huile traversent les axes 10b en direction radiale, et s'étendent donc entre leurs périphéries interne et externe. Dans l'exemple représenté, ils s'étendent entre les surfaces tronconiques 10e, 10f, d'une part, et les pistes 11b et les périphéries externes des nervures 11c, d'autre part.

Une bride annulaire 10ga de fixation du noyau 22 s'étend radialement vers l'intérieur depuis la surface cylindrique 10g. Cette bride 10ga comprend des orifices axiaux de passage de vis 30.

Dans le premier mode de réalisation du noyau 22 représenté aux figures 8 à 11, ce noyau 22 comprend deux flasques annulaires 22a, 22b coaxiaux et sensiblement tronconiques comportant chacun une première extrémité de plus grand diamètre et une seconde extrémité opposée de plus petit diamètre. Les flasques, respectivement avant 22a et arrière 22b, sont fixés ensemble par leurs secondes extrémités. Comme les surfaces 10e, 10f, les flasques 22a, 22b s'évasent donc dans des directions axiales opposées. Les flasques 22a, 22b sont montés ajustés à l'intérieur de l'axe 10b et sont destinés à recouvrir les surfaces tronconiques 10e, 10f pour définir avec celles-ci au moins une cavité annulaire 24 de circulation d'huile de lubrification et de refroidissement de l'axe 10b. Dans l'exemple représenté, ces cavités 24 sont au nombre de deux qui sont séparées l'une de l'autre par la bride 10ga.

Les extrémités des flasques 22a, 22b comportent chacune une surface cylindrique externe de centrage comportant une gorge annulaire de réception d'un joint d'étanchéité 25a. Le flasque avant 22a comporte une extrémité amont montée ajustée par sa surface cylindrique externe sur la surface 10h, et une extrémité aval montée ajustée par sa surface cylindrique externe sur la surface 10g, en avant de la bride 10ga. Le flasque arrière 22b comporte une extrémité amont montée ajustée par sa surface cylindrique externe sur la surface 10h, en arrière de la bride 10ga, et une extrémité aval montée ajustée par sa surface cylindrique externe sur la surface 10i.

On constate à la figure 8 que les orifices 10d débouchent radialement à l'intérieur dans les cavités 24. On constate également que les flasques 22a, 22b comprennent des moyens de raccordement fluidique des cavités 24 au distributeur 13 décrit dans ce qui précède.

Le flasque arrière 22b comprend ici une chambre interne 26 centrée sur l'axe Y et reliée d'une part par des passages radiaux 27 formés dans ce flasque à la cavité 24 délimitée par ce flasque et la surface 10f. Ce flasque 22b comporte en outre une tubulure de raccordement 25 centrée sur l'axe Y dont une extrémité débouche dans la chambre 26 et dont l'extrémité opposée orientée vers l'arrière forme un raccord mâle destiné à recevoir par emmanchement un des raccords femelles 21ca d'une sortie 21c du distributeur 13. En variante, la tubulure 25 pourrait former un raccord femelle. Le flasque arrière 22b est monté ajusté dans l'axe 10b par translation axiale depuis l'arrière jusqu'à ce que son extrémité avant soit en appui axial sur la bride 10ga. Le flasque 22b comprend à son extrémité avant une autre tubulure de raccordement 23 centrée sur l'axe Y, qui définit une partie d'extrémité avant de la chambre 26 et qui est destinée à traverser axialement la bride 10ga, en son milieu, en vue du raccordement de la chambre 26 à une chambre interne 28 du flasque avant 22a. La chambre 26 s'étend ainsi entre la tubulure 25 et la chambre 28, cette dernière étant reliée à la cavité 24 formée entre le flasque 22a et la surface 10e par des perçages 29 formés dans ce flasque.

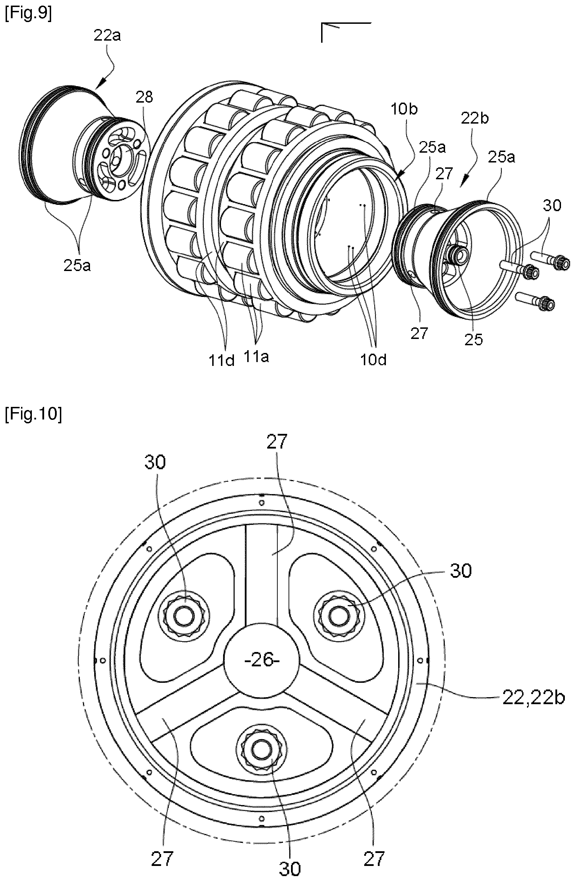

Les perçages 27, 29 de chaque flasque 22a, 22b sont au nombre de trois (ce nombre peut varier entre 1 et plus) et régulièrement répartis autour de l'axe Y (figure 10). Dans l'exemple, ils sont au même nombre de vis de fixation. Le nombre dépend principalement de la place radiale qu'il reste après ou avant implantation des vis. Les flasques 22a, 22b comportent en outre chacun des orifices de passage ou de vissage de vis 30 de fixation entre eux et à la bride 10ga. Les orifices des flasques sont alignés ensemble et à ceux de la bride 10ga et les vis 30 sont vissées depuis l'arrière à travers, dans l'ordre, un orifice du flasque 22b, un orifice aligné de la bride 10ga et un orifice du flasque 22a (cf. figure 8).

La figure 11 montre le cheminement de l'huile depuis le distributeur 13 jusqu'aux rouleaux 11a et jusqu'à la cage 11d, en vue de la lubrification des rouleaux et de la cage mais aussi le refroidissement de l'axe 10b. L'huile pénètre dans le distributeur 13 par son entrée 21a et alimente la chambre 21b puis circule jusqu'aux sorties 21c. L'huile pénètre dans la chambre 26 par la tubulure 25 puis dans la chambre 28 par la tubulure 23. Les chambres 26 et 28 permettent de ralentir le flux d'huile (et d'éviter un effet Venturi au droit des perçages 27, 29) et de mieux répartir l'huile entre les flasques avant et arrière. L'huile circule ensuite dans les perçages 27, 29 pour alimenter les cavités 24. L'huile s'écoule axialement le long des surfaces, de l'arrière vers l'amont sur la surface 10e, du fait que les perçages 29 débouchent à l'extrémité arrière de la cavité avant 24, et de l'avant vers l'arrière sur la surface 10f, du fait que les perçages 27 débouchent à l'extrémité avant de la cavité arrière 24. L'huile circule ensuite dans les orifices 10d pour atteindre les pistes 11b et les nervures 11c en vue de la lubrification des rouleaux 11a et des cages 11d. L'huile est amenée « froide » par le distributeur 13. Elle circule dans l'axe 10b qui est chaud et est donc réchauffée. Elle arrive ainsi à une bonne température pour un rendement optimal de lubrification au niveau du palier tout en ayant évacuée la chaleur générée. La quantité de chaleur prise par l'huile dépend notamment de la forme des flasques 22a, 22b.

L'épaisseur ou la dimension radiale de la cavité 24 est choisie en fonction de l'augmentation de température attendue de l'huile destinée à circuler dans cette cavité, par exemple entre 10°C et 60°C. La température de l'huile en sortie des orifices 10d est également fonction de l'angle d'inclinaison des surfaces tronconiques 10e, 10f et des flasques 22a, 22b, par rapport à l'axe Y.

Les figures 12 et 13 représentent un autre axe 110b comportant un autre noyau qui est désigné par la référence 122 et qui, bien que fonctionnant sur le même principe, ne fait pas l'objet de l'invention. Les caractéristiques sont désignées par les mêmes chiffres de référence que celles du noyau 22, augmentés d'une centaine. La description qui précède en relation avec le noyau 22 s'applique à cette variante dans la mesure où elle ne contredit pas ce qui suit.

Le noyau 122 diffère du précédent mode de réalisation notamment en ce que les flasques 122a, 122b définissent une seule cavité annulaire 124 avec la périphérie interne de l'axe 110b. Cet axe 110b ne comprend pas ici de surface cylindrique interne entre ses surfaces tronconiques 110^{e}, 110f. Les extrémités de plus petit diamètre des surfaces tronconiques 110^{e}, 110f sont ainsi directement reliées l'une à l'autre. La périphérie interne de l'axe 110b ne comprend pas de bride 10ga du type précité. La cavité 124 a une forme générale de « diabolo ». On peut également constater que l'épaisseur radiale de cette cavité 124 est inférieure à celle dans le précédent mode de réalisation. Les orifices 110d de passage d'huile sont répartis en rangées annulaires et chaque rangée d'orifices débouche dans la cavité 124, dans le fond d'une rainure annulaire radialement interne formée sur la surface 110^{e}, 110f.

La chambre 126 du flasque arrière 122b est en communication fluidique avec la tubulure 125 et avec des perçages radiaux 127 qui débouchent dans la cavité 124. Cette chambre 126 est ici fermée à son extrémité avant. La chambre 126 est donc seulement formée dans le flasque arrière 122b. Les perçages 127 peuvent également être formés seulement dans le flasque arrière 122b ou bien formés dans ce flasque 122b et fermé axialement par le flasque avant 122a.

Le flasque arrière 122b comprend un prolongement cylindrique central 131 vers l'avant qui comporte un filetage externe et qui traverse un orifice central du flasque avant 122a. Ce prolongement 131 reçoit un écrou 132 vissé depuis l'avant qui prend appui axialement sur le flasque avant, en vue du serrage de l'ensemble. Du fait de l'absence de la bride 10ga du précédent mode de réalisation, les flasques 122a, 122b sont fixés seulement l'un à l'autre et son maintenus en position à l'intérieur de l'axe 110b par le seul montage ajusté des flasques sur la périphérie interne de l'axe 110b. Le serrage de l'écrou 132 génère un serrage axial de la périphérie interne de l'axe 110b entre les flasques 122a, 122b du fait de la complémentarité de formes.

Comme cela est visible dans les dessins, les extrémités de plus grand diamètre des flasques peuvent en outre être serrées axialement contre des épaulements cylindriques 133 de la périphérie interne de l'axe 110b, lors du serrage de l'écrou 132.

La figure 13 montre le cheminement de l'huile depuis le distributeur 113 jusqu'aux rouleaux 111a, en vue de la lubrification des rouleaux mais aussi le refroidissement de l'axe 110b. L'huile pénètre dans le distributeur 113 comme indiqué dans ce qui précède puis pénètre dans la chambre 126 par une douille 137 engagée dans la tubulure 125. La douille 137 est une douille de raccordement similaire aux douilles 37 et dont la longueur est ajustée en fonction du besoin. Le nombre de douilles 137 est égal au nombre de conduites 21d et permet de reprendre le désalignement et d'avoir un montage moins hyperstatique du distributeur 113 sur le réducteur. L'huile circule ensuite dans les perçages 127 pour alimenter la cavité 124, sensiblement en son milieu. L'huile s'écoule axialement le long des surfaces 110^{e}, 110f, depuis le centre de la cavité vers l'arrière et vers l'avant. L'huile circule ensuite dans les orifices 110d pour atteindre les pistes 111b et les nervures 111c en vue de la lubrification des rouleaux 111a et de la cage 111d.

Les figures 14 à 17 illustrent un mode de réalisation d'un déflecteur 18 utilisé dans un réducteur 6 mettant en oeuvre des axes 10b selon l'invention, ce déflecteur 18 ne faisant pas en lui-même l'objet de l'invention. Comme évoqué dans ce qui précède, le réducteur 6 comprend plusieurs déflecteurs 18 qui sont logés dans la cage 14 et sont chacun disposés entre deux satellites 8 adjacents. Le nombre de déflecteurs 18 du réducteur 6 est donc égal au nombre de satellites 8 de ce réducteur.

La première fonction d'un déflecteur 18 est de guider l'huile de lubrification des dentures des satellites 8 et d'éviter la recirculation d'huile entre satellites, d'où la notion de « déflecteur inter-satellites ». Les déflecteurs 18 sont ainsi conformés pour épouser la forme périphérique des satellites 8.

Comme on le voit aux figures 4 et 15, en plus de s'étendre entre deux satellites 8 adjacents, chaque déflecteur 18 est situé entre le solaire 7 d'une part, situé radialement à l'intérieur, et un couple de pontets 14c, 14d, d'autre part, situé radialement à l'extérieur.

Chaque déflecteur 18 comporte un bloc comprenant une première surface latérale 18a qui est cylindrique et concave et qui a un rayon de courbure R1 mesuré depuis un axe G1, qui est confondu avec l'axe Y de rotation d'un satellite 8 (figure 15). Le bloc comporte une seconde surface latérale 18b, opposée à la première surface 18a, qui est cylindrique et concave et qui a un rayon de courbure R1 mesuré depuis un axe G2 qui est parallèle à G1, et qui est confondu avec l'axe Y de rotation d'un autre satellite 8.

Chacune des première et seconde surfaces 18a, 18b comporte une languette en saillie 34 qui a une forme générale allongée autour de l'axe G1, G2 de la surface considérée et dont la périphérie interne est incurvée concave et a un rayon de courbure R2 mesuré depuis cet axe G1, G2 qui est inférieur à R1. Les languettes 34 d'un déflecteur 18 s'étendent sensiblement dans un même plan perpendiculaire à l'axe X et sont de préférence situées au milieu des surfaces 18a, 18b respectives (en direction axiale).

Les surfaces 18a, 18b et les languettes 34 s'étendent autour des axes G1, G2 respectifs sur une plage angulaire comprise entre 30 et 80° dans notre exemple, et de préférence la plus grande possible.

Dans l'exemple représenté et comme cela est visible aux figures 14 et 15, les extrémités longitudinales des languettes 34 sont en retrait par rapport à des plans passant respectivement par les faces 18e, 18f du déflecteur 18. Dans la variante représentée à la figure 23, les extrémités longitudinales 34a des languettes 34 pourraient traverser de tels plans et être ainsi en saillie dans le but notamment de rallonger la longueur des languettes et donc la dimension circonférentielle de guidage de l'huile autour des satellites 8. Dans ce dernier cas, la languette 34 dépasserait du côté de la face 18f où se trouvent les jets 36cb (coté solaire) et de l'autre du côté des pontets 14c, 14d et du doigt 15a. Sur la solution des figures 14a et 15, la languette recouvre environ 2x45° de la circonférence d'un satellite (deux fois, car il y a deux déflecteurs de part et d'autre). Si la languette est prolongée comme visible à la figure 14b, en dehors du déflecteur de sorte à ce qu'elle ne touche pas le solaire au montage et qu'elle ne sorte pas de la circonférence de la cage, la languette pourrait recouvrir environ 2x75° de recouvrement sur 360° du satellite.

Le bloc de chaque déflecteur 18 comprend en outre une face plane avant 18c, qui est sensiblement radiale lorsque le déflecteur est monté dans la cage 14 du réducteur, et une face plane arrière 18d, qui est également sensiblement radiale. Le bloc comporte en outre une face plane supérieure 18e (ou radialement extérieure), qui est destinée à être orientée du côté du couple de pontets 14c, 14d, et une face inférieure 18f (ou radialement intérieure), qui est destinée à être orientée du côté du solaire 7. Cette face 18f est cylindrique et concave et a un rayon de courbure R3 mesuré depuis un axe G3, qui est confondu avec l'axe X du solaire. Cette face 18f a donc pour fonction de guider l'huile de lubrification de la denture du solaire.

Les déflecteurs 18 s'étendent entre les parois radiales 14a, 14b de la cage 14 et ont leurs faces 18a, 18b qui sont en appui sur les faces internes en regard de ces parois 14a, 14b. Les déflecteurs 18 sont fixés à la cage 14 par des vis 35 par exemple. Chaque bloc peut comporter, par exemple sur sa face arrière 18d, des trous taraudés de réception de vis 35 de fixation du déflecteur à la paroi arrière 14b de la cage 14. Une configuration identique sur la paroi 14a est aussi possible.

Comme on le voit à la figure 4, les trous taraudés de chaque déflecteur 18 sont situés sensiblement au milieu de la hauteur ou dimension radiale du déflecteur, et les vis 35 vissées dans ces trous traversent des orifices de la paroi 14b qui sont situés à proximité du bord périphérique 14ba radialement interne de cette paroi 14b (figures 3 et 4). On comprend ainsi qu'en position montée chaque déflecteur 18 a une partie inférieure qui s'étend radialement vers l'intérieur du bord périphérique 14ba, entre ce bord périphérique 14ba et le solaire 7.

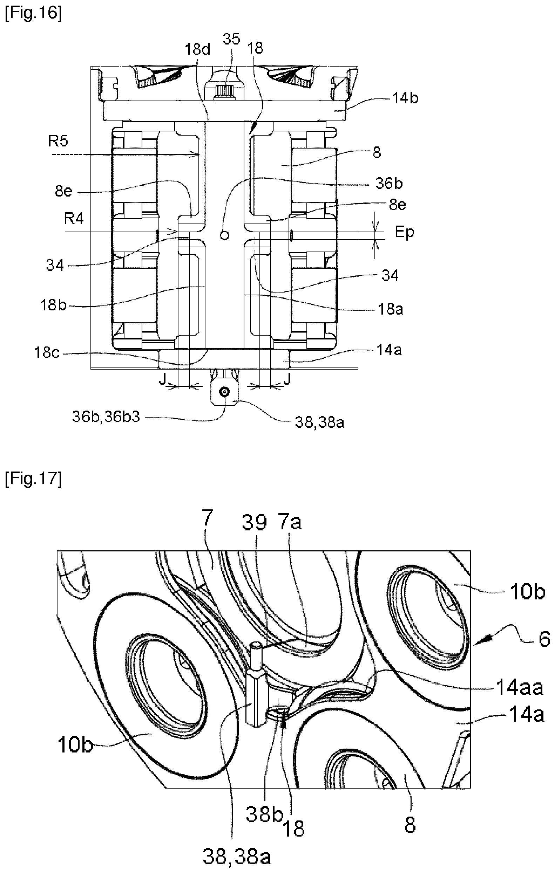

On constate en outre à la figure 16 qu'en position montée, les languettes 34 de chaque déflecteur 18 s'étendent au milieu et à l'intérieur des rainures inter-hélices 8e des deux satellites 8 entre lesquels ce déflecteur est monté. Un jeu J prédéterminé est laissé entre le sommet de chaque languette 34 et le fond en regard de la rainure 8e dans laquelle est insérée la languette. La languette 34 a une épaisseur Ep ou dimension axiale qui représente environ 10 à 90% de la dimension axiale de la rainure 8e. La rainure 8e d'un satellite a un rayon R4 mesuré depuis l'axe Y du satellite et sa denture a un rayon externe R5 mesuré depuis le même axe. Le rayon R2 est compris entre R4 et R5 et le jeu J précité est égal à la différence entre R2 et R4 (figures 15 et 16). Ce jeu J doit être le plus petit possible pour optimiser la fonction du de la languette 34 de « déflecteur inter-hélices ». Les languettes 34 ont pour fonction de limiter le passage d'huile d'une denture à une autre denture d'un même satellite 8.

Chaque déflecteur 18 comprend un circuit de lubrification intégré, qui comprend une entrée d'huile 36a reliée par des perçages 36b à au moins une sortie d'huile 36c. Dans l'exemple représenté, l'entrée d'huile 36a est située sur la face arrière 18d et comprend une tubulure destinée à former un raccord mâle et à coopérer par emmanchement mâle-femelle avec une sortie 20c du distributeur 13 décrit dans ce qui précède. Même si un raccord est présenté dans ce qui suit comme mâle et destiné à coopérer avec un raccord femelle, il peut en variante être remplacé par un raccord femelle destiné donc à coopérer avec un raccord mâle, et inversement (figure 3).

Chaque déflecteur 18 comprend au moins une sortie 36c qui se présente sous la forme d'un orifice 36ca formant un raccord femelle qui est destiné à recevoir une douille 37 de raccordement fluidique étanche (figure 3). Comme l'entrée 36a, la douille 37 peut être supprimée et remplacée par un raccord mâle. Cet orifice 36ca est ici situé sur la face supérieure 18e de chaque déflecteur. La figure 3 permet de voir qu'une moitié de la douille 37 est engagée par emmanchement mâle-femelle dans l'orifice 36ca et que l'autre moitié est engagée par emmanchement mâle-femelle dans un orifice femelle prévu à l'extrémité radialement interne du corps 17a de la broche 17 portée par un couple de pontets 14c, 14d. Cette même figure montre que l'entrée 36a est reliée par deux perçages 36b1, 36b2 à la sortie 36c. Ces perçages sont perpendiculaires, un premier 36b1 s'étendant suivant l'axe X, depuis l'entrée 36a, et un second 36b2 s'étendant radialement depuis le premier perçage jusqu'à l'orifice 36ca.

Les surfaces 18a, 18b sont reliées chacune à la face 18f par un bord tronqué sur lequel sont formés des orifices 36cb de projection d'huile sur les zones d'engrènement du solaire 7 avec les satellites 8. Ces orifices 36cb sont reliés par des canaux 36b4 internes au bloc, au perçage axial 36b1 (figures 3 et 14). La figure 15 montre les trajectoires 36cb1 des jets d'huile projetés par les orifices 36cb d'un déflecteur 18.

L'un des déflecteurs 18 comprend un gicleur 38 destiné à projeter de l'huile de lubrification sur les cannelures 7a du solaire 7. Ce déflecteur 18 est celui représenté à la figure 14 et au centre à la figure 15. Le gicleur 38 est formé d'une seule pièce avec le bloc du déflecteur 18 et a ici une forme générale en L dont une branche 38a a une orientation radiale et dont une branche 38b s'étend axialement et relie la face avant 18c du bloc à l'extrémité radialement externe de la branche 38a. Le gicleur 38 s'étend dans un plan médian de symétrie du bloc. Les déflecteurs 18 qui ne comportent pas de gicleur 38 présentent également un plan médian de symétrie, qui correspond à un plan passant par l'axe X du réducteur 6.

La branche 38a s'étend radialement vers l'intérieur depuis la branche 38b et son extrémité libre radialement interne comprend un orifice 36cc orienté vers l'arrière pour la projection d'huile sur les cannelures 7a. La figure 17 montre le jet d'huile 39 projeté par ce gicleur 38.

L'alimentation en huile du gicleur 38 est réalisé en prolongeant le perçage axial 36b1 visible à la figure 3 jusqu'à la face avant 18c du bloc du déflecteur 18, et dans la branche axiale 38b (figure 14). Un perçage radial 36b3 additionnel est réalisé dans la branche 38 pour relier ce perçage axial 36b à l'orifice 36cc de projection d'huile du gicleur. L'extrémité radialement externe du perçage 36b3 du gicleur, qui est donc opposée à l'orifice 36cc de projection d'huile, peut être fermée par un bouchon 36d rapporté (figure 14). Comme on le voit à la figure 3, les déflecteurs 18 qui ne comportent pas de gicleur 38 ont un perçage axial 36b plus court, c'est-à-dire non débouchant sur la face avant 18c du bloc du déflecteur.

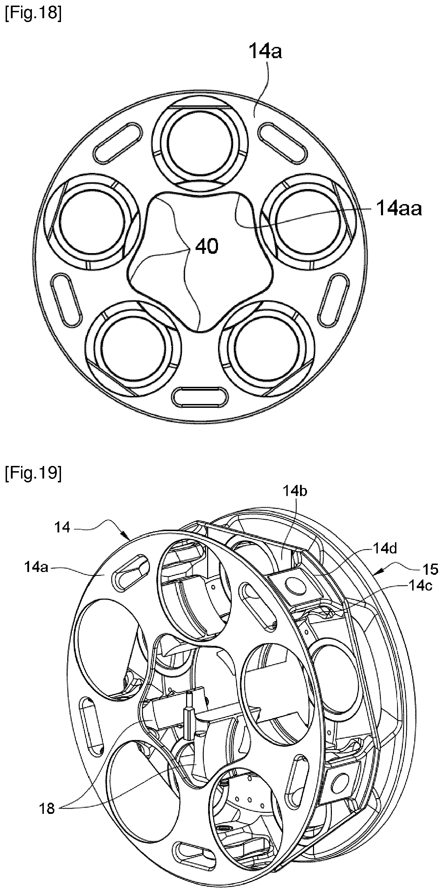

Les figures 17 et 18 permettent de voir que le bord périphérique radialement interne 14aa de la paroi radiale avant 14a comprend des échancrures 40 régulièrement réparties autour de l'axe X pour faciliter le montage des déflecteurs et en particulier de celui comportant le gicleur 38. Ce bord périphérique 14aa a ainsi une forme générale en étoile. Le nombre d'échancrures 40 est égal au nombre de déflecteurs 18 et donc au nombre de satellites 8. Le nombre minimum d'échancrures 40 est égal au nombre de gicleurs 38 soit un seul dans l'exemple représenté. Mais, afin de gagner en masse et d'avoir une forme plus régulière/périodique, il est plus avantageux d'avoir le nombre maximum soit le nombre de satellites 8 ou déflecteurs 18. L'intérêt de réaliser une seule échancrure serait d'avoir besoin de détromper le montage pour que l'on ne puisse pas monter le déflecteur-gicleur à l'une des cinq positions qui ne lui serait pas destinée pour plusieurs raisons.

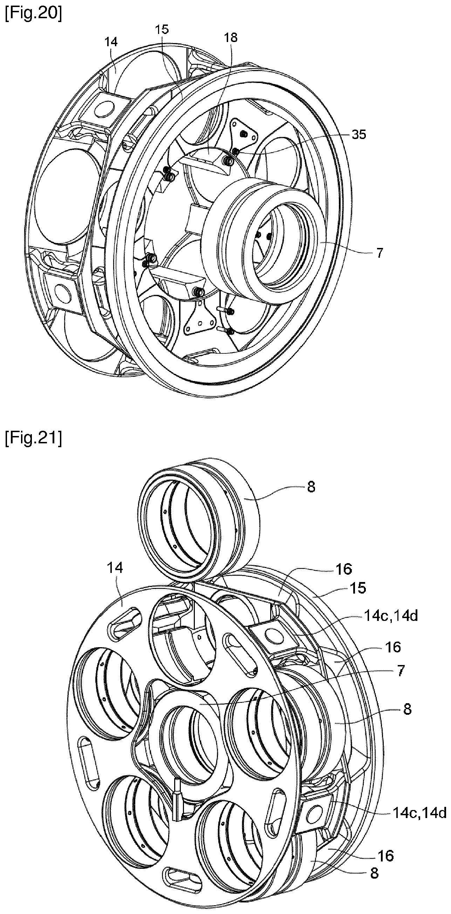

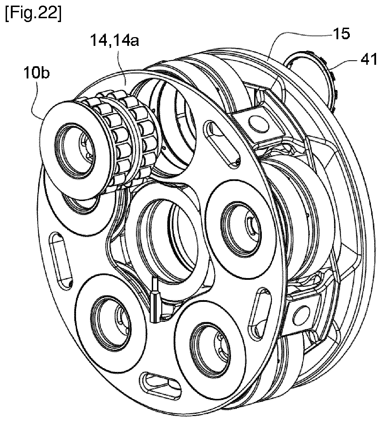

Les figures 19 à 22 illustrent des étapes de montage du réducteur 6 et en particulier des déflecteurs 18, du solaire 7, des satellites 8 et de leurs axes 10b. Une première étape consiste à disposer les déflecteurs 18 dans la cage 14 qui est déjà fixée au porte-cage 15. Les déflecteurs sont insérés les uns après les autres dans la cage, à travers l'orifice central de la paroi avant 14a puis sont déplacés radialement vers l'extérieur les uns après les autres pour être positionnés de sorte que leurs trous taraudés soient alignés avec les orifices de passage des vis 35 de la paroi arrière 14b (figure 19). Les monter en les glissant par les lumières 16 est aussi possible. Ces vis 35 sont alors vissées et serrées pour fixer les déflecteurs 18 à la cage 14 (figure 20). Le solaire 7 est ensuite inséré dans la cage 14 par translation axiale depuis l'arrière, à travers l'orifice central de la paroi arrière 14b (figure 20). Les satellites 8 sont ensuite engagés les uns après les autres dans la cage 14, par translation en direction radiale à travers les lumières 16 de montage situées entre les couples de pontets 14c, 14d (figure 21). Les axes 10b des satellites 8 sont ensuite insérés dans leurs satellites respectifs par translation axiale depuis l'amont, à travers des ouvertures prévues à cet effet sur la paroi radiale avant 14a (figure 22). Un écrou 41 est vissé sur l'extrémité arrière de chaque axe 10b et prend appui axialement sur la paroi arrière 14b afin de maintenir les axes des satellites dans la cage 14 (figures 3, 4 et 22).

## Revendications

1. Axe (10b,) de satellite (8) pour un réducteur mécanique (6) de turbomachine (1), en particulier d'aéronef, cet axe ayant une forme générale tubulaire et comportant des orifices (10d,) sensiblement radiaux s'étendant entre au moins une surface radialement interne (10e, 10f) de cet axe et la périphérie externe de cet axe, et un noyau (22) de lubrification et de refroidissement, monté dans ledit axe (10b), **caractérisé en ce que** le noyau (22) comprend des premier et second flasques (22a, 22b) coaxiaux et tronconiques comportant chacun une première extrémité de plus grand diamètre et une seconde extrémité opposée de plus petit diamètre, les flasques étant fixés ensemble par leurs secondes extrémités et étant destinés à s'étendre à l'intérieur dudit axe et à recouvrir deux surfaces tronconiques internes (10e, 10f) de cet axe pour définir avec celle-ci deux cavités annulaires (24) de circulation d'huile de lubrification et de refroidissement de cet axe, lesdites secondes extrémités desdits premier et second flasques comportant des moyens de raccordement fluidique desdites cavités annulaires à une source d'huile de lubrification et de refroidissement.

2. Axe (10b) selon la revendication 1, dans lequel chacune desdites premières extrémités, voire également chacune desdites secondes extrémités, comporte une surface cylindrique externe de centrage comportant une gorge annulaire de réception d'un joint d'étanchéité (25a).

3. Axe (10b) selon la revendication 1 ou 2, dans lequel l'un (22a) desdits flasques (22a, 22b) comprend une chambre interne (26) centrée sur un axe Y commun aux flasques, cette chambre étant reliée d'une part par des passages radiaux (27) formés dans ce flasque ou entre les deux flasques aux dites cavités annulaires (24), et d'autre part à une tubulure (25) de raccordement centrée sur l'axe Y.

4. Axe (10b) selon la revendication 3, dans lequel ladite tubulure (25) est configurée pour coopérer par emmanchement mâle-femelle.

5. Axe (10b) selon la revendication 3 ou 4, dans lequel ladite chambre (26) a une forme générale cylindrique centrée sur l'axe Y et comprend une extrémité longitudinale reliée à la tubulure (25) et une extrémité longitudinale opposée qui est soit fermée, soit ouverte et qui débouche dans une autre chambre (28), cette autre chambre étant formée dans l'autre flasque (22b) et étant reliée par d'autres passages radiaux (29) aux dites cavités annulaires (24)**.**

6. Axe (10b) selon l'une des revendications précédentes, dans lequel lesdits flasques (22a, 22b) sont configurés pour être fixés l'un à l'autre.

7. Axe (10b) selon l'une des revendications 1 à 5, dans lequel lesdits flasques (22a, 22b) sont configurés pour être fixés l'un à l'autre ainsi qu'à une bride annulaire de fixation (10ga) dudit axe (10b) de satellite (8).

8. Axe (10b) de satellite (8) selon l'une des revendications précédentes, dans lequel sa périphérie externe est configurée pour définir au moins une, et de préférence deux, piste(s) (11b) de roulement de palier(s).

9. Axe (10b) de satellite (8) selon la revendication 7 ou 8, dans lequel sa périphérie interne est du type biconique et comprend notamment les deux surfaces tronconiques internes (10e, 10f) qui sont coaxiales et s'évasent dans des directions opposées, ces deux surfaces tronconiques étant recouvertes par lesdits flasques (22a, 22b) et définissant avec ces flasques les deux cavités annulaires (24) de circulation d'huile.

## Patentansprüche

1. Achse (10b) für ein mechanisches Planetenrad (8) für ein mechanisches Untersetzungsgetriebe (6) einer Turbomaschine (1), insbesondere eines Flugzeugs, wobei diese Achse eine allgemeine Rohrform aufweist und im Wesentlichen radiale Öffnungen (10d) umfasst, die sich zwischen mindestens einer radial inneren Oberfläche (10e, 10f) dieser Achse und dem äußeren Umfang dieser Achse erstrecken, und einen Schmier- und Kühlkern (22), der in der Achse (10b) montiert ist, **dadurch gekennzeichnet, dass** der Kern (22) erste und zweite koaxiale, kegelstumpfförmige Flansche (22a, 22b) umfasst, die jeweils ein erstes Ende mit größerem Durchmesser und ein zweites, entgegengesetztes Ende mit kleinerem Durchmesser umfassen, wobei die Flansche an ihren zweiten Enden aneinander befestigt sind und dazu bestimmt sind, sich in dem inneren der Achse zu erstrecken und zwei innere kegelstumpfförmige Oberflächen (10e, 10f) dieser Achse abzudecken, um mit dieser zwei ringförmige Hohlräume (24) für die Zirkulation von Schmier- und Kühlöl dieser Achse zu definieren, wobei die zweiten Enden der ersten und zweiten Flansche Mittel zur Fluidverbindung der ringförmigen Hohlräume mit einer Quelle für Schmier- und Kühlöl umfassen.

2. Achse (10b) nach Anspruch 1, wobei jedes der ersten Enden, sogar auch jedes der zweiten Enden, eine äußere zylindrische Zentrieroberfläche umfasst, die eine ringförmige Nut zur Aufnahme einer Dichtung (25a) umfasst.

3. Achse (10b) nach Anspruch 1 oder 2, wobei einer (22a) der Flansche (22a, 22b) eine innere Kammer (26) umfasst, die auf einer den Flanschen gemeinsamen Y-Achse zentriert ist, wobei diese Kammer einerseits durch radiale Kanäle (27), die in diesem Flansch oder zwischen den zwei Flanschen an den ringförmigen Hohlräumen (24) gebildet sind, und andererseits zwischen einem Anschlussrohransatz (25), der auf der Y-Achse zentriert ist, verbunden sind.

4. Achse (10b) nach Anspruch 3, wobei der Rohransatz (25) dazu konfiguriert ist, durch Stecker-Buchse-Aufschrumpfen zusammenzuwirken.

5. Achse (10b) nach Anspruch 3 oder 4, wobei die Kammer (26) eine allgemeine zylindrische auf der Y-Achse zentrierte Form aufweist und ein Längsende umfasst, das mit dem Rohransatz (25) verbunden ist, und ein entgegengesetztes Längsende, das entweder geschlossen oder offen ist und in eine andere Kammer (28) mündet, wobei diese andere Kammer in dem anderen Flansch (22b) gebildet und durch andere radiale Kanäle (29) mit den ringförmigen Hohlräumen (24) verbunden ist.

6. Achse (10b) nach einem der vorstehenden Ansprüche, wobei die Flansche (22a, 22b) dazu konfiguriert sind, aneinander befestigt zu sein.

7. Achse (10b) nach einem der Ansprüche 1 bis 5, wobei die Flansche (22a, 22b) dazu konfiguriert sind, aneinander sowie an einem ringförmigen Befestigungsflansch (10ga) der Achse (10b) des Planetenrads (8) befestigt zu sein.

8. Achse (10b) eines Planetenrads (8) nach einem der vorstehenden Ansprüche, wobei ihr äußerer Umfang dazu konfiguriert ist, mindestens eine, bevorzugt zwei, Lagerlaufbahn(en) (11b) zu definieren.

9. Achse (10) eines Planetenrads (8) nach Anspruch 7 oder 8, wobei der Innenumfang vom Doppelkegeltyp ist und insbesondere zwei innere kegelstumpfförmige Oberflächen (10e, 10f) umfasst, die koaxial sind und sich in entgegengesetzte Richtungen erweitern, wobei diese zwei kegelstumpfförmigen Oberflächen von den Flanschen (22a, 22b) abgedeckt sind und mit diesen Flanschen zwei ringförmige Ölzirkulations-Ringhohlräume (24) definieren.

## Claims

1. Axis (10b), of satellite (8) for a mechanical reducer (6) of an, in particular, aircraft's turbomachine (1), said axis having a general tubular shape, and comprising substantially radial orifices (10d), extending between at least one radially internal surface (10e, 10f) of the axis and the external periphery of said axis and a lubrication and cooling core (22), mounted in said axis (10b), **characterized in that** the core (22) comprises first and second coaxial and truncated flanges (22a, 22b), each comprising a first end of a larger diameter and a second opposite end of a smaller diameter, the flanges being fixed together by their second ends and being intended to extend inside said axis, and to cover two internal truncated surfaces (10e, 10f) of said axis to define with it, two annular cavities (24) for circulating lubrication and cooling oil of the axis, said second ends of said first and second flanges comprising means for fluidically connecting said annular cavities to a lubrication and cooling oil source.

2. Axis (10b) according to claim 1, wherein each of said first ends, even also each of said second ends, comprises an external centering cylindrical surface, comprising an annular recess for receiving a seal (25a).

3. Axis (10b) according to claim 1 or 2, wherein one (22a) of said flanges (22a, 22b) comprises an internal chamber (26) centered on an axis Y common to the flanges, said chamber being connected, on the one hand, by radial passages (27) formed in this flange or between the two flanges to said annular cavities (24), and on the other hand, to a connecting tubing (25) centered on the axis Y.

4. Axis (10b) according to claim 3, wherein said tubing (25) is configured to engage by male-female fitting.

5. Axis (10b) according to claim 3 or 4, wherein said chamber (26) has a general cylindrical shape centered on the axis Y and comprises a longitudinal end connected to the tubing (25) and an opposite longitudinal end which is either closed, or open and which opens into another chamber (28), said other chamber being formed in the other flange (22b) and being connected by other radial passages (29) to said annular cavities (24).

6. Axis (10b) according to one of the preceding claims, wherein said flanges (22a, 22b) are configured to be fixed to one another.

7. Axis (10b) according to one of claims 1 to 5, wherein said flanges (22a, 22b) are configured to be fixed to one another, as well as to an annular fixing clip (10ga) of said satellite (8) axis (10b).

8. Satellite (8) axis (10b) according to one of the preceding claims, wherein its external periphery is configured to define at least one, and preferably two, roller bearing track(s) (11b).

9. Satellite (8) axis (10b) according to claim 7 or 8, wherein its internal periphery is of the biconic type and comprises, in particular, the two internal truncated surfaces (10e, 10f) which are coaxial and flare in opposite directions, these two truncated surfaces being covered by said flanges (22a, 22b) and defining with these flanges, the two annular cavities (24) for circulating oil.
